# EUROPEAN PATENT SPECIFICATION

(11) **EP 1 324 521 B1**
(45) Date of publication and mention of the grant of the patent: **25.05.2011**
(21) Application number: 02258928.7
(22) Date of filing: 20.12.2002
(51) Int. Cl.: H04J 3/14, H04L 1/22

(54) **Data communication apparatus with distributed traffic protection switching system**
Datenkommunikationsvorrichtung mit einem System zur verteilten Schutzumschaltung
Appareil pour communication de données avec un système de commutation de protection distribuée

(30) Priority: 20.12.2001 CA 2365752; 22.02.2002 US 79915
(43) Date of publication of application: 02.07.2003
(73) Proprietor: Ciena Luxembourg S.a.r.l., 2220 Luxembourg (LU)
(72) Inventor: Fatica, Dino B., Neapean, Ontario K2E 6P9 (CA); Coll, Pierre, Hull, Quebec J8Z 3G2 (CA)
(74) Representative: Jeffrey, Philip Michael

(56) References cited:
- EP-A- 0 579 029
- US-A- 5 069 521

## Description

### FIELD OF THE INVENTION

The invention relates to the field of protection switching, in particular to devices and methods for providing a protection switching scheme of distributed nature for use in a data communication apparatus.

### BACKGROUND OF THE INVENTION

A typical data communication apparatus that exchanges data traffic with network elements has working ports normally used to handle the data traffic and protection ports to which the data traffic can be switched if one or more of the working ports fail. Protection switching is handled by a traffic protection arbiter which receives a protection switch request, evaluates its priority, determines if protection may proceed based on network and local conditions, negotiates protection switching with the affected network elements and coordinates the movement of data traffic.

However, if more than one of the working ports fail simultaneously, the protection arbiter must address all the failures sequentially. This delays a protection switching response, which is undesirable.

Against this background, there exists a need to provide novel methods and devices to provide faster protection switching.

EP 0 579 029 discloses a telecommunications system having 1:n group facility protection. Distributed digital cross connects in the system are each provided with a protection port assigned to a group of member ports.

US 5 069 521 discloses an optical transmission apparatus having at least one standby optical fibre transmission path and at least one worker optical fibre transmission path. A plurality of worker paths can be interfaced with a plurality of protection paths by an optical swithcing means.

### SUMMARY OF THE INVENTION

According to the invention, there is provided a data communication apparatus as claimed in claim 1.

Advantageously, the invention allows a reduction of the time required to effect protection switching when failures occur at several working ports at the same time or at about the same time. The protection switching functional element can effect protection switching on several failed working ports in parallel which takes less time by comparison to the sequential approach used in prior art devices.

A port card implementing several working ports preferably includes a failure detector for sensing a failure in any one of the working ports. A configuration memory, containing configuration data, specifies the protection entity that protects the working ports. The failure detector constructs one or more control messages and sends the control messages to the protection entity to notify the protection entity about the failed working ports. In a specific example, the control messages identify the port card containing the protection ports. Optionally the control messages also specify, in addition to the port card, the protection ports to be used for each failed working port.

The port card with one or more protection ports includes a protection switching functional element. When the protection switching functional element receives the one or more control messages, the protection switching functional element performs a plurality of protection switching processes in parallel such as to switch data traffic from the failed working ports to the respective protection ports.

In this example, a protection switching process associated with a failed working port includes the step sending messages through a respective protection port to a remote network element to notify the remote network element to switch data traffic such that data traffic passing between the remote network element and the data communication apparatus via the failed working port is switched to the protection port. The protection switching process further includes the step of sending one or more messages to an internal component of the data communication apparatus to notify the internal component to switch the data traffic passing between the internal component and the failed working port to the protection port. The internal component can be a switch card, for example.

At least one port card preferably comprises:
a) at least one working port;
b) a port card functional element in communication with said at least one working port;
c) a failure detector for sensing a failure of said at least one working port;
d) a configuration memory in communication with said failure detector, said configuration memory including configuration data identifying a protection entity;
when said failure detector senses a failure of said at least one working port, said failure detector communicating with said configuration memory to extract said configuration data and use said configuration data to construct a control message for dispatch to the protection entity to notify the protection entity that said at least one working port has failed.

Also, at least one other port card preferably comprises:
a) a protection port;
b) a protection switching functional element in communication with said protection port;
c) said protection switching functional element being responsive to a control message conveying a notification of a failure of a working port to implement a protection switching process to switch data traffic from the working port to said protection port.

The invention also provides a method for performing protection switching in a data communication apparatus as claimed in claim 5.

### BRIEF DESCRIPTION OF THE DRAWINGS

A detailed description of examples of implementation of the present invention is provided hereinbelow with reference to the following drawings, in which:
Figure 1 is a block diagram of a data communication apparatus using a distributed protection switching system;
Figure 2 is a block diagram of a port card of the data communication apparatus shown in Figure 1; and
Figure 3 is a flow chart illustrating a protection switching procedure implemented by the distributed protection switching system of the data communication apparatus shown in Figure 1.

In the drawings, embodiments of the invention are illustrated by way of example. Whenever possible the same reference numerals have been used throughout the drawings to designate similar or identical components. It is to be expressly understood that the description and drawings are only for purposes of illustration and as an aid to understanding, and are not intended to be a definition of the limits of the invention.

### DETAILED DESCRIPTION

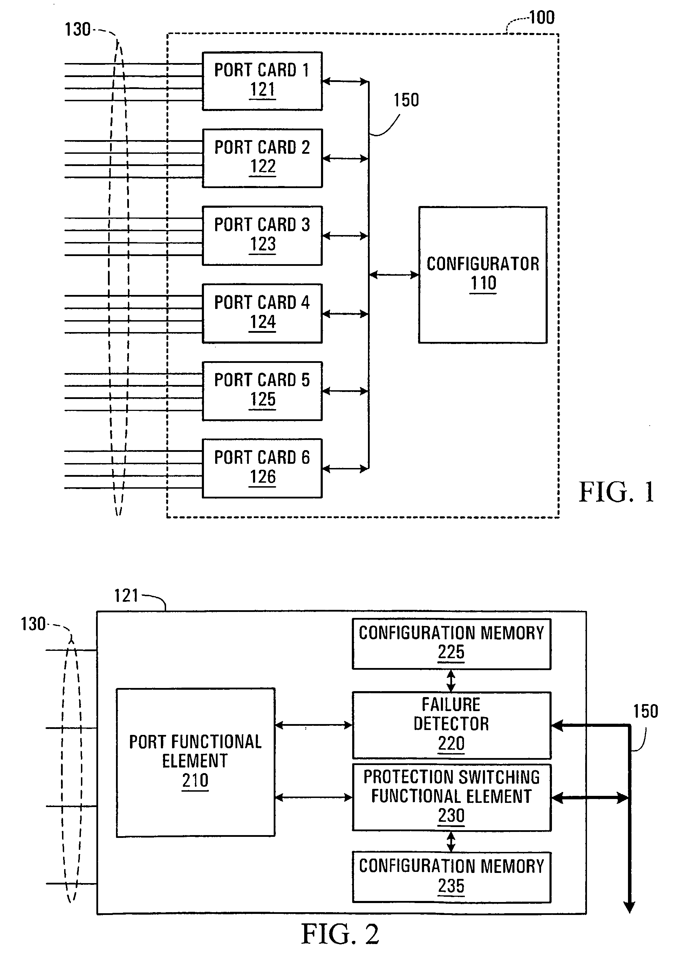

Figure 1 shows a data communication apparatus 100 with a distributed protection switching system. The data communication apparatus 100 may be any apparatus, such as a SONET/SDH ADM that exchanges data traffic with network elements. The data communication apparatus 100 comprises a plurality of port cards 121-126, each implementing one or more ports. Each port connects to one of a plurality of communication paths 130, which may be, for example, metallic conductors or optical fibers. Figure 1 shows a particular implementation comprising six port cards 121-126, each port card 121-126 being connected to four communication paths 130. Therefore, each port card 121-126 implements four ports. The reader skilled in the art will readily appreciate that the telecommunication apparatus 100 may comprise any number of port cards connected to any number of communication paths.

In the example shown of figure 1, each port card 121-126 connects to a plurality of switch cards, which are not shown for clarity.

The data communication apparatus 100 includes a bus 150 connecting to all the port cards 121-126. The port cards 121-126 exchange control messages over the bus 150. The bus 150 also connects the port cards 121-126 to a configurator 110. Briefly, the purpose of the configurator 110 is to configure the protection switching system such that it operates according to specifications defined by the network operator. The configurator 110 is shown for clarity as a single block but this is not to be construed as a limitation. In a specific example of implementation, the configurator 110 can be a functional element, such as a program module of the maintenance system of the communication apparatus 100. Such a maintenance system allows the operator to specify through a user interface settings for the protection switching system. Examples of what those settings will be provided later.

In a possible variant, the port cards 121-126 connect to one another and to the configurator 110 via a duplicated star configuration communication infrastructure. This presents an advantage from the standpoint of reliability over the bus infrastructure described earlier that can be a single point of failure.

All the port cards 121-126 are identical from the standpoint of protection infrastructure and communication infrastructure. However, the port cards may not be identical from the standpoint of traffic carrying capacity of the ports.

For simplicity only port card 121 will be described, it being understood that this description also applies to the rest of the port cards 122-126. As shown in Figure 2, the port card 121 comprises a port card functional element 210, which globally designates the various components and functions of the port card 121 in order to allow the port card 121 to exchange data traffic with network elements. Examples of such components include interfaces, receivers, transmitters, etc. These components will not be described in detail because they are conventional. Although not shown in the drawings, the port card functional element 210 communicates with the various switch cards to which the port card 121 connects. Thus, data received from a network element passes through the port card functional element 210 and it is then transferred to one or more of the switch cards. Similarly, data to be sent to a network element is delivered from one or more of the switch cards to the port card functional element 210 and then released into one or more of the ports on the port card 121.

The port card 121 further comprises a failure detector 220, which communicates with a configuration memory 225, and a protection switching functional element 230, which communicates with a configuration memory 235. The failure detector 220 designates globally the various devices and functions in the port card 121 designed to detect malfunctions, in particular failures that prevent the port card 121 to send data or receive data on one or more of its ports. Such a port failure may be caused by a failure the port card itself, a failure of the communication path 130 connected to the port, or a failure of the network element to which the port 121 leads. The configuration memory 225 contains information as to how failures detected by the failure detector 210 are to be handled. A specific example is to which port card (other than the port card 121) the failure on a certain port is to be reported such that protection switching can be made. In the case where the working ports are protected by respective protection ports residing on different port cards, the configuration memory 225 specifies all the port cards containing the protection ports associated with the failed working ports such that the failure can be reported to all the port cards containing the protection ports associated to the failed working ports.

The failure detector 220 connects to the bus 150 such that control messages can be exchanged with other port cards 122-126 and with the configurator 110. The protection switching functional element 230 designates globally the various devices and functions necessary to perform protection switching. The protection switching procedures are conducted in accordance with settings in the configuration memory 235. The protection switching functional element 230 is connected to the bus 150 such as exchange control messages with other components of the data communication apparatus 100. The protection switching functional element 230 also communicates with the port card functional element 210 such that the protection switching functional element can send control messages over any one of the ports of the port card 121 to external network elements.

Although the configuration memories 225 and 235 are shown as separate components they can be implemented as a single unit.

Referring back to figure 1, the ports on the port cards 121-126 fall generally in two different categories: working ports and protection ports. The working ports convey data traffic during the normal operation of the data communication apparatus 100. When one of the working ports fails, the data traffic is switched to a protection port. As indicated earlier, a failure of a working port may be caused by a failure of the internal circuitry of the port card 121-126 or by the failure of the communication path 130 to which it is connected or a failure of the network element to which the communication path 130 leads.

It is advantageous to associate each working port with a respective protection port. This provides a robust system where each working port is protected against failure. However, this is not essential to the present invention and a wide variety of working ports/protection port combinations can be used. For example, a protection port may serve a pair of working ports. If one of the working ports fails then the data traffic is switched to the protection port leaving the other working port without protection. This scheme works on a first to fail basis. Alternatively, one of the working ports may carry higher priority data traffic than the other working port. If the working port with the lower priority data traffic fails the data traffic is switched to the protection port. However if the higher priority working port subsequently fails, then the lower priority data traffic is dropped and the higher priority data traffic is switched to the protection port.

The designation of a given port as being either a protection port or a working port is user-configurable. Preferably, but not exclusively, any port may be designated as being a protection port or a working port. The configuration is done through the configurator 110. The configuration happens off-line, and once it is completed the configurator is not involved anymore in the operation of data communication apparatus 100. During the configuration operation, configuration data is generated and stored in the configuration memories 225 and 235. The configuration memory 225 stores the information regarding whether or not a given working port is protected and, if it is protected the associated protection entity; such as the port card and the protection port on that port card. The configuration memory 235 stores information regarding the details of the protection scheme to implement and the actions to take to provide the protection switching. The configuration data generally defines how the distributed protection switching system behaves when a failure occurs.

Consider for example the port card 121. The network operator may decide that the four ports of the port card 121 are all working ports and that they are all to be protected by respective protection ports that reside on the port card 124. Thus, the information loaded by the configurator 110 in the configuration memory 225 includes data specifying for each working port the protection entity, such as the corresponding protection port, and also the port card on which the protection port is located. Note that the protection ports for all the working ports on port card 121 do not have to reside all on the same port card, they can be distributed over several port cards. Although technically possible, the port card can contain both working ports and protection ports. This, however, is not recommended in particular when the protection ports protect the working ports since a failure of the port card will negate any protection switching.

In addition to specifying which ports are protection ports and which ports are working ports, the configurator 110 assists the user in determining the protection scheme to implement. The protection scheme comprises, for example, whether or not a working port is protected, a priority associated to each working port to protect by a protection port and whether or not a protection port is allowed or not to convey data traffic while not performing a protection operation, among others. The different types of protection schemes that can be implemented are known in the art and will not be described in further details.

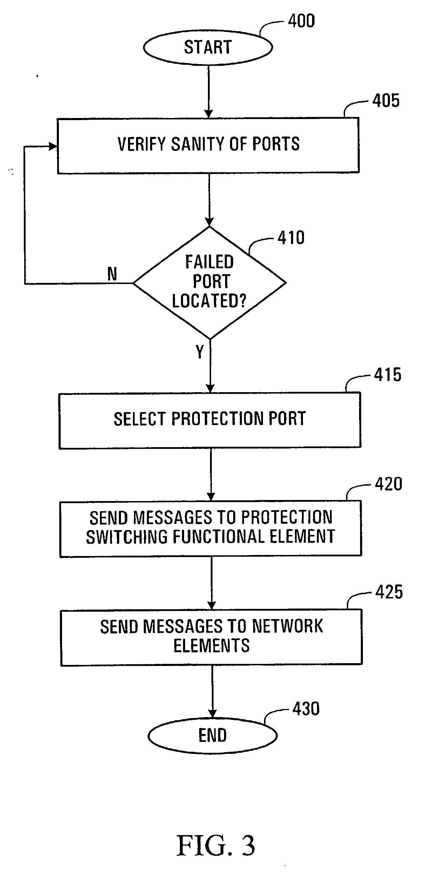

A flow chart of a specific example of the sequence of events when the telecommunication apparatus 100 effects protection switching is illustrated on Figure 3.

For the sake of this example, it will be assumed that port cards 121, 122 and 123 implement only working ports and port cards 124, 125 and 126 implement only protection ports. Furthermore, a protection port is associated with each working port. In this context, the protection switching functional elements 210 in port cards 121, 122 and 123 are inoperative or not enabled.

Once the data communication apparatus 100 is in operation, with the configuration operation completed, some ports, say ports # 1, #2 and #3 of port card 121, may fail at the same time or about the same time. Then, the flow of events regarding the protection switching start at step 400.

At step 405, the failure detector 220 of port card 121 is informed by the port functional element 210 of port card 121 that there is a failure on the ports #1, #2 and #3. Then, at step 410, the failure detector 220 of port card 121 consults the configuration memory 225 of port card 121 regarding which port card 121-126 to contact, if any, to effect the protection switching. In this case, port card 124 provides protection for the ports #1, #2 and #3 of port card 121 through its ports #1, #2 and #3.

At step 415, control messages are sent by the failure detector 220 of port card 121 to the protection switching element 230 of port card 124 to advise that the ports #1, #2 and #3 of port cards 121 have failed. In response to those control signals, the protection switching element 230 initiates several protection switching processes in parallel, each process being associated with a protection port. At step 420, each process communicates through its associated port with the network element to which the communication pathway 130 of the port connects, to indicate that protection switching is to be performed and waits for the network element to respond. When, through appropriate handshaking protocols, the protection switching is provisioned, the process sends control messages to the switch cards so that:
a) incoming data traffic that previously was received at the failed port will now arrive at the protection port; and
b) outgoing data traffic previously sent from the failed working port should now be passed through the protection port.

It should be appreciated that the protection switching processes instituted in connection with the failed working ports are all run substantially independently from one another. The processes are run in parallel, which avoids the inherent delays associated with a sequential approach where one process must complete before another one starts. In a case where several working ports fail at the same time, the parallel protection switching approach is likely to be completed faster than the sequential approach.

For the sake of clarity, "parallel" does not necessarily mean that the processes are concurrent, in other words they start at the same time and terminate at the same time. Parallel processing occurs when one step of one process occurs at the same time that the same or different step of another process is occurring.

In the case where working ports on the port card 122 were to fail at the same time or about the same time the working ports #1, #2 and #3 on port card 121 fail, which could happen if the signals on the working ports on the port card 122 are wavelength multiplexed with the signals on the working ports on port card 121, the protection switching processes associated with the working ports on port card 122 will also happen in parallel with the protection switching processes associated with the working ports on port card 121, albeit conducted by a different protection switching functional element 230 than the protection switching functional element 230 in the case of the working ports of port card 121.

In a variant, an element outside of the port cards 121-126, say a switch card, can signal the failure if the port card itself fails. In this variant, the switch cards can also have a configuration memory and can send control signals to provide the protection to port cards 121-126 and to network elements.

Although various embodiments have been illustrated, this was for the purpose of describing, but not limiting, the invention. Various modifications will become apparent to those skilled in the art and are within the scope of this invention, which is defined more particularly by the attached claims.

## Claims

1. A data communication apparatus (100), comprising:
(a) a plurality of port cards (121-126) including:
at least one first port card implementing a plurality of working ports for exchanging data traffic with network elements; and
at least one second port card implementing a plurality of protection ports;
(b) each first port card including:
a failure detector (220) for sensing a failure of one or more working ports; and
a configuration memory (225) including configuration data identifying respective protection ports associated with each failed working port, the failure detector (220) sending control messages to each second port card implementing the respective protection ports; and
(c) each second port card including at least one protection switching functional element (230) responsive to the control messages from said failure detector (220) to initiate a respective protection switching process associated with each identified protection port, such that a plurality of protection switching processes are performed in parallel for switching data traffic from the failed working ports to respective protection ports.

2. A data communication apparatus as claimed in claim 1, wherein each working port and each protection port is operative to connect to respective optical communication paths (130).

3. A data communication apparatus as claimed in claim 1, wherein each protection switching process includes sending (425) messages over the respective protection port to a remote network element to notify the remote network element to switch data traffic such that data traffic directed by the remote network element to the failed working port is redirected to the respective protection port.

4. A data communication apparatus as defined in claim 3, wherein said data communication apparatus includes at least one switch card connecting to said first and to said second port cards, and each protection switching process includes sending messages to said switch card to notify said switch card to switch data traffic such that data traffic directed by said switch card to a failed working port is redirected to the respective protection port.

5. A method for performing protection switching in a data communication apparatus having a plurality of port cards (121-126) including: at least one first port card implementing a plurality of working ports for exchanging data traffic with network elements; and at least one second port card implementing a plurality of protection ports, said method comprising:
a) sensing when one or more of the plurality of working ports fail;
b) identifying respective protection ports associated with each failed working port;
c) sending control messages to each second port card implementing the identified protection ports; and
d) performing a respective protection switching process associated with each identified protection port in response to the control messages, such that a plurality of protection switching processes are performed in parallel for switching data traffic from the failed working ports to respective protection ports.

## Patentansprüche

1. Datenkommunikationsvorrichtung (100), umfassend:
(a) mehrere Portkarten (121-126), umfassend:
mindestens eine erste Portkarte, die mehrere Arbeitsports zum Austauschen von Datenverkehr mit Netzwerkelementen implementiert; und
mindestens eine zweite Portkarte, die mehrere Schutzports implementiert;
(b) wobei jede erste Portkarte Folgendes umfasst:
einen Ausfalldetektor (220) zum Erfassen eines Ausfalls eines oder mehrerer Arbeitsports; und
einen Konfigurationsspeicher (225), der Konfigurationsdaten umfasst, die jeweilige mit jedem ausgefallenen Arbeitsport assoziierte Schutzports identifizieren, wobei der Ausfalldetektor (220) Steuernachrichten zu jeder zweiten Portkarte sendet, die die jeweiligen Schutzports implementiert; und
(c) wobei jede zweite Portkarte mindestens ein Schutzumschalt-Funktionselement (230) umfasst, das auf die Steuernachrichten von dem Ausfalldetektor (220) reagiert, um einen mit jedem identifizierten Schutzport assoziierten jeweiligen Schutzumschaltprozess einzuleiten, dergestalt, dass mehrere Schutzumschaltprozesse parallel zum Umschalten von Datenverkehr von den ausgefallenen Arbeitsports auf jeweilige Schutzports durchgeführt werden.

2. Datenkommunikationsvorrichtung nach Anspruch 1, wobei jeder Arbeitsport und jeder Schutzport wirkt, um an jeweilige optische Kommunikationspfade (130) angeschlossen zu werden.

3. Datenkommunikationsvorrichtung nach Anspruch 1, wobei jeder Schutzumschaltprozess Folgendes umfasst:
Senden (425) von Nachrichten über den jeweiligen Schutzport zu einem entfernten Netzwerkelement, um das entfernte Netzwerkelement zu benachrichtigen,
Datenverkehr dergestalt umzuschalten, dass durch das entfernte Netzwerkelement gelenkter Datenverkehr zu dem ausgefallenen Arbeitsport zu dem jeweiligen Schutzport umgelenkt wird.

4. Datenkommunikationsvorrichtung nach Anspruch 3, wobei die Datenkommunikationsvorrichtung mindestens eine Umschaltkarte umfasst, die an die erste und an die zweite Portkarte angeschlossen wird, und jeder Schutzumschaltprozess das Senden von Nachrichten zu der Umschaltkarte umfasst, um die Umschaltkarte zu benachrichtigen, Datenverkehr dergestalt umzuschalten, dass durch die Umschaltkarte gelenkter Datenverkehr zu einem ausgefallenen Arbeitsport zu dem jeweiligen Schutzport umgelenkt wird.

5. Verfahren zum Durchführen von Schutzumschaltung in einer Datenkommunikationsvorrichtung, die mehrere Portkarten (121-126) aufweist, mit den folgenden Schritten: mindestens eine erste Portkarte implementiert mehrere Arbeitsports zum Austauschen von Datenverkehr mit Netzwerkelementen; und mindestens eine zweite Portkarte implementiert mehrere Schutzports, wobei das Verfahren die folgenden Schritte umfasst:
a) Erfassen, wenn einer oder mehrere der mehreren Arbeitsports ausfallen;
b) Identifizieren von jeweiligen mit jedem ausgefallenen Arbeitsport assoziierten Schutzports;
c) Senden von Steuernachrichten zu jeder zweiten Portkarte, die die identifizierten Schutzports implementiert; und
d) Durchführen eines mit jedem identifizierten Schutzport assoziierten jeweiligen Schutzumschaltprozesses als Reaktion auf die Steuernachrichten, dergestalt, dass mehrere Schutzumschaltprozesse parallel durchgeführt werden, um Datenverkehr von den ausgefallenen Arbeitsports auf jeweilige Schutzports umzuschalten.

## Revendications

1. Appareil de communication de données (100), comprenant :
(a) une pluralité de cartes de ports (121-126) comportant :
au moins une première carte de ports mettant en oeuvre une pluralité de ports de travail permettant d'échanger un trafic de données avec des éléments de réseau ; et
au moins une seconde carte de ports mettant en oeuvre une pluralité de ports de protection ;
(b) chaque première carte de ports comportant :
un détecteur de défaut (220) destiné à détecter un défaut d'un ou plusieurs ports de travail ; et
une mémoire de configuration (225) comportant des données de configuration identifiant des ports de protection respectifs associés à chaque port de travail défectueux, le détecteur de défaut (220) envoyant des messages de commande à chaque seconde carte de ports mettant en oeuvre les ports de protection respectifs ;
et
(c) chaque seconde carte de ports comportant au moins un élément fonctionnel de commutation de protection (230) sensible aux messages de commande provenant dudit détecteur de défaut (220) pour déclencher un processus de commutation associé à chaque port de protection identifié, de telle manière qu'une pluralité de processus de commutation de protection soient exécutés en parallèle pour commuter le trafic de données des ports de travail défectueux vers les ports de protection respectifs.

2. Appareil de communication de données selon la revendication 1, dans lequel chaque port de travail et chaque port de protection ont pour fonction de se connecter à des trajets de communication optiques respectifs (130).

3. Appareil de communication de données selon la revendication 1, dans lequel chaque processus de commutation de protection consiste à envoyer (425) des messages par l'intermédiaire du port de protection respectif à un élément de réseau distant afin d'informer l'élément de réseau distant qu'il doit commuter le trafic de données, de telle manière que le trafic de données dirigé par l'élément de réseau distant vers le port de travail défectueux soit dirigé vers le port de protection respectif.

4. Appareil de communication de données selon la revendication 3, dans lequel ledit appareil de communication de données comprend au moins une carte de commutation se connectant auxdites première et seconde cartes de ports, et chaque processus de commutation de protection consiste à envoyer des messages à ladite carte de commutation pour informer ladite carte de commutation qu'elle doit commuter le trafic de données, de telle manière que le trafic de données dirigé par ladite carte de commutation vers un port de travail défectueux soit redirigé vers le port de protection respectif.

5. Procédé destiné à effectuer une protection de commutation dans un appareil de communication de données ayant une pluralité de cartes de ports (121-126) consistant à :
faire en sorte qu'au moins une première carte de ports mette en oeuvre une pluralité de ports de travail pour échanger un trafic de données avec des éléments de réseau ; et
faire en sorte qu'au moins une seconde carte de ports mette en oeuvre une pluralité de ports de protection,
ledit procédé consistant à :
(a) détecter les cas où un ou plusieurs de la pluralité de ports de travail deviennent défectueux ;
(b) identifier des ports de protection respectifs associés à chaque port de travail défectueux ;
(c) envoyer des messages de commande à chaque seconde carte de ports mettant en oeuvre les ports de protection identifiés ; et
(d) effectuer un processus de commutation de protection respectif associé à chaque port de protection identifié en réponse aux messages de commande, de telle manière qu'une pluralité de processus de commutation de protection soient exécutés en parallèle pour commuter un trafic de données des ports de travail défectueux vers des ports de protection respectifs.
